# FASCICULE DE BREVET EUROPEEN

(11) **EP 0 898 551 B1**
(45) Date de publication et mention de la délivrance du brevet: **28.06.2000**
(21) Numéro de dépôt: 97925110.5
(22) Date de dépôt: 21.05.1997
(51) Int. Cl.: B64G 1/64, F03G 7/06, F16B 1/00

(54) **SYSTEME DE BLOCAGE TEMPORAIRE DE DEPLACEMENT DE DEUX CORPS L'UN PAR RAPPORT A L'AUTRE, SUIVANT AU MOINS UN SENS D'UNE DIRECTION PREDETERMINEE**
SYSTEM ZUM SPERREN EINER RELATIVEN BEWEGUNG ZWISCHEN ZWEI KÖRPERN, IN ZUMINDEST EINEM SINN EINER VORGEGEBENEN RICHTUNG
SYSTEM FOR TEMPORARILY BLOCKING THE RELATIVE DISPLACEMENT OF TWO BODIES, FOLLOWING AT LEAST A PRESET DIRECTION

(30) Priorité: 22.05.1996 FR 9606345
(43) Date de publication de la demande: 03.03.1999
(73) Titulaire: ALCATEL, 75008 Paris (FR)
(72) Inventeur: LECONTE, Sylvain, F-31850 Montrabe (FR); ORHON, Gilles, F-78410 Aubergenville (FR)
(74) Mandataire: Rinuy, Santarelli
(86) Numéro de dépôt international: FR9700887
(87) Numéro de publication internationale: WO9744243

(56) Documents cités:
- EP-A- 0 699 580
- US-A- 5 245 738
- US-A- 5 248 233
- US-A- 5 312 152
- CRYOGENICS, vol. 34, no. 5, Mai 1994, JORDAN HILL, OXFORD, GB, pages 389-392, XP000449790 SEIDEL ET AL.: "NOVEL ORBITAL DISCONNECT SUPPORT FOR CRYOGENIC TANKS"

## Description

La présente invention est relative à un système de blocage temporaire de déplacement de deux corps l'un par rapport à l'autre, suivant au moins un sens d'une direction prédéterminée et en particulier d'un système de blocage qui, après déblocage, autorise un débattement important d'un corps par rapport à l'autre.

Plus précisément, dans certains domaines tels que la mise en orbite de satellites, il est généralement nécessaire de bloquer en position certains éléments pendant le lancement, tout en leur rendant leur liberté de déplacement après la mise en orbite. Il s'agit notamment de plateaux basculants auxquels, après la mise en orbite, il faut rendre leur possibilité de fort débattement angulaire.

On a, pour ce faire, penser à utiliser des vérins qui, outre la possibilité de déplacement du plateau par rapport à un support de fixation, tel qu'un plateau fixe, pourrait également permettre le verrouillage en position du plateau par rapport à ce même support, pendant le lancement.

Cependant, l'homme du métier dans le domaine spatial est plutôt réticent à utiliser des vérins, principalement pour des raisons de fiabilité.

En effet, en cas de défaillance d'un tel vérin il est particulièrement difficile de procéder à une quelconque réparation ou de faire intervenir un vérin de secours.

Ce type de vérin est d'ailleurs également relativement encombrant, en particulier lorsqu'il est nécessaire d'assurer une possibilité de débattement angulaire important du plateau mobile.

La présente invention vise à pallier ces inconvénients.

Elle propose à cet effet, un système de blocage temporaire de déplacement de deux corps l'un par rapport à l'autre, suivant au moins un sens d'une direction prédéterminée, selon la revendication 1.

Un tel système de blocage est particulièrement fiable, car la libération d'un corps par rapport à l'autre est obtenue par action de l'organe de rupture constitué d'un alliage à mémoire de forme. La seule défaillance possible est celle des moyens de chauffage, pour lesquels il est particulièrement aisé de prévoir une redondance.

Pour des raisons de simplicité et de commodité, ledit organe de rupture est adapté à se déformer par allongement suivant ladite direction, sous l'effet d'un chauffage.

Dans un mode préféré de réalisation, ledit organe de rupture est interposé entre deux butées transversales à ladite direction, de manière que l'organe de rupture, lors de son allongement, sollicite lesdites butées dans le sens d'une rupture de la zone à casser.

Selon un aspect particulièrement intéressant de la présente invention, l'une des pièces d'interface comporte un logement de réception d'une partie au moins des moyens de blocage, ces moyens de blocage étant montés par l'une de leurs extrémités sur la pièce d'interface à logement de réception, mobiles entre une position de blocage de déplacement avant rupture de la zone à casser, dans laquelle ces moyens de blocage font partiellement saillie du logement de réception et une position rétractée au sein du logement de réception, après rupture de la zone à casser.

Grâce à ces dispositions, après rupture de la zone à casser, le second corps est non seulement libéré par rapport au premier corps, mais il lui est également assurée une grande possibilité de débattement par rapport à ce dernier, du fait de la rétractation des moyens de blocage au sein du logement de réception de la première pièce d'interface.

La rétractation peut être effectuée par effet de gravité ou, dans une application avantageuse au domaine spatial, par libération d'énergie potentielle, notamment au moyen d'un élément de rappel élastique.

Suivant d'autres dispositions préférées, éventuellement combinées :
- l'une des butées transversales à ladite direction comporte un plateau s'étendant dans le logement de réception, transversalement à ladite direction, ladite zone de rupture est constituée par une zone continue de moindre épaisseur du plateau définissant une zone interne contre laquelle vient buter une extrémité longitudinale de l'organe de rupture et une zone périphérique, ledit plateau étant supporté dans ledit logement de réception, dans ladite position de blocage, par la zone périphérique ;
- lesdits moyens de blocage comportent en outre une tige s'étendant selon ladite direction, ledit plateau présentant une ouverture circulaire de passage de ladite tige, ladite tige comportant une extrémité filetée engagée dans ladite ouverture, et un écrou monté sur ledit filetage, en butée contre ledit plateau ; - l'autre pièce d'interface est solidaire de ladite tige et présente une surface de butée constituant l'autre butée transversale contre laquelle vient buter la seconde extrémité longitudinale de l'organe de rupture ;
- la tige comporte un plateau transversal au voisinage de son extrémité opposée à ladite extrémité filetée, ce dit plateau transversal de tige présentant une surface de butée constituant l'autre butée transversale contre laquelle vient buter l'autre extrémité longitudinale de l'organe de rupture et une partie lisse à cette autre extrémité sur laquelle est engagée une ouverture circulaire de l'autre pièce d'interface ;
- le logement de réception est délimité par une paroi cylindrique comportant un épaulement transversal à l'axe longitudinal de ladite paroi, ladite direction étant coaxiale audit axe, le système de maintien comportant en outre un élément tubulaire reçu dans le logement de réception et présentant une butée annulaire externe à l'une de ses extrémités longitudinales adaptée à coopérer en sens axial avec ledit épaulement et un rebord annulaire interne au voisinage de son autre extrémité longitudinale, ledit organe de rupture étant constitué par un manchon entourant ladite tige, ledit organe de rupture et ladite tige étant reçus dans ledit élément tubulaire de sorte que ledit organe de rupture, lors de sa déformation, vienne buter, d'une part, contre ledit plateau transversal et, d'autre part, contre ledit rebord annulaire interne, et ladite butée annulaire externe étant, en position de blocage, enserrée entre le plateau transversal et l'épaulement de l'élément tubulaire ;
- la tige présente en outre un second plateau transversal au voisinage de son extrémité opposée à ladite extrémité filetée, le second plateau transversal étant adapté à venir en butée contre le rebord annulaire interne de l'élément tubulaire par l'un de ses côtés, la tige présentant en outre, au voisinage de ce côté, une réduction sensible de diamètre constituant une seconde zone à casser transversale et, au voisinage de l'autre côté, une seconde extrémité longitudinale filetée sur laquelle est engagé un taraudage de l'autre pièce d'interface ;
- les moyens de chauffage comportent une bobine chauffante entourant ledit manchon ;
- les moyens de chauffage comportent une seconde bobine chauffante, les moyens de chauffage étant adaptés à chauffer l'organe de rupture au moyen de la seconde bobine en cas de défaillance de ladite bobine chauffante ; - ledit plateau transversal est supporté dans ledit logement de réception au moyen d'une bague présentant un filetage externe engagé sur un taraudage de la paroi cylindrique du logement ;
- l'élément élastique de rappel comporte au moins un ressort hélicoïdal disposé latéralement entre l'élément tubulaire et la paroi cylindrique, ce ressort venant buter longitudinalement, d'une part, contre la butée annulaire externe de l'élément tubulaire, du côté opposé de cette butée à celui portant contre le plateau transversal, et, d'autre part, contre une paroi d'une oreille de logement du ressort, transversale à l'axe longitudinal ;
- chacune des pièces d'interface est fixée au corps correspondant par vissage.

Des objets, caractéristiques et avantages de l'invention ressortent de la description qui suit, donnée à titre d'exemple non limitatif, en regard des dessins annexés sur lesquels :
- les figures 1 et 2 sont des vues en élévation-coupe d'un mode de réalisation du système de blocage conforme à l'invention ;
- la figure 3 est une vue en élévation-coupe d'un autre mode de réalisation du système de blocage conforme à l'invention ; et
- la figure 4 est une vue en coupe transversale selon la ligne IV-IV de la figure 3.

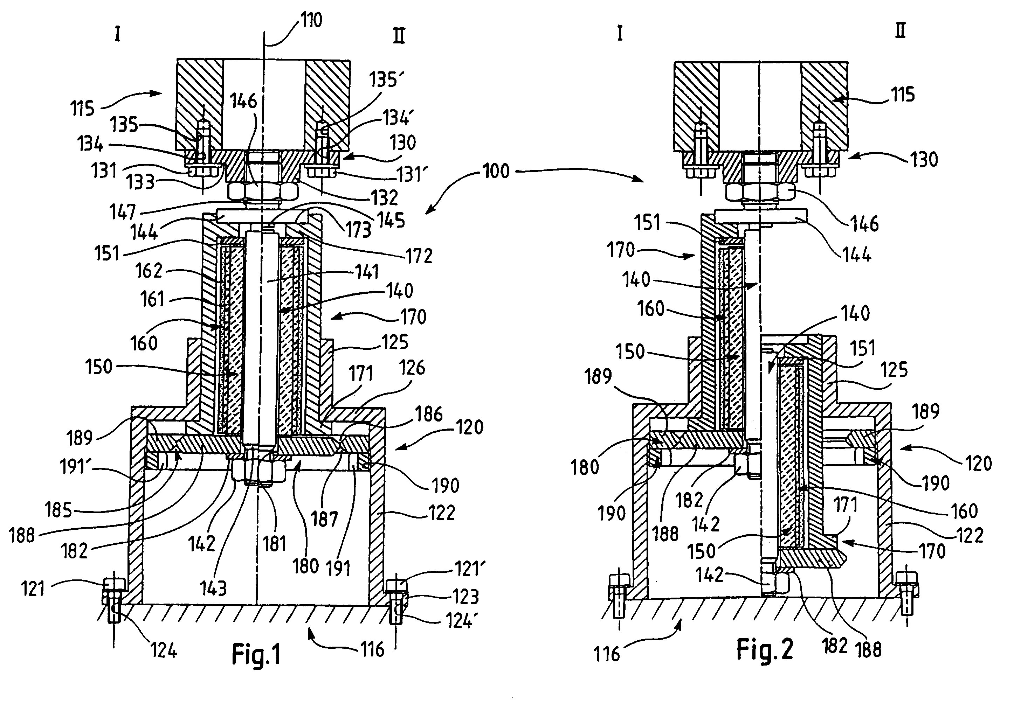

On va maintenant décrire à l'appui des figures 1 et 2 un mode de réalisation du système de blocage temporaire de déplacement de la présente invention.

Il s'agit ici plus particulièrement d'un système de blocage temporaire 100 de déplacement de deux corps l'un par rapport à l'autre, suivant les deux sens d'une direction prédéterminée 110 qui constitue également l'axe longitudinal du système de blocage temporaire 100.

Les deux corps sont représentés ici par une extrémité d'un plateau mobile repéré 115 et par une embase de fixation repérée 116, cette dernière pouvant également être remplacée par un plateau fixe.

Une première pièce d'interface 120 du système de blocage 100 est fixée à l'embase 116 au moyen de vis à pans creux 121, 121', tandis qu'une seconde pièce d'interface 130 du système de blocage 100 est fixée au moyen de vis à tête hexagonale 131, 131' au plateau mobile 115.

La première pièce d'interface 120 comporte, à cet effet, un premier tronçon de cylindre 122 à section circulaire prolongé à l'une de ses extrémités par un rebord annulaire 123 s'étendant radialement vers l'extérieur et pourvu d'ouvertures 124, 124' de passage des vis 121, 121'.

Ce premier tronçon de cylindre 122 est lié à un second tronçon de cylindre à section circulaire 125 par l'intermédiaire d'un raccord annulaire 126 s'étendant radialement vers l'intérieur, c'est-à-dire transversalement à l'axe 110 et en direction de celui-ci. Il en résulte que le second tronçon de cylindre 125 présente un diamètre inférieur à celui du premier tronçon de cylindre 122. Comme ce dernier tronçon de cylindre 122, le tronçon de cylindre 125 s'étend parallèlement à l'axe 110 du système de blocage 100, mais sur une longueur inférieure à celui-ci.

La seconde pièce d'interface 130 se présente, elle, sous la forme d'un fût taraudé 132 prolongé à l'une de ses extrémités par un rebord annulaire 133 de fût s'étendant radialement sur la périphérie de ce dernier. Tout comme la première pièce d'interface 120, cette seconde pièce d'interface 130 est réalisée d'un seul tenant. Par ailleurs, le rebord annulaire 133 de fût est percé d'ouvertures de passage 134, 134' des vis 131, 131' dont les tiges sont engagées dans des taraudages 135, 135' ménagés dans le plateau mobile 115.

Le fût taraudé 132 est engagé sur le filetage d'une tige 140 filetée à ses deux extrémités.

Cette tige 140 s'étendant coaxialement à l'axe 110 est entouré sur sa partie centrale 141 par un manchon 150 constitué d'un alliage à mémoire de forme dont la fonction sera détaillée ci-après, lui-même entouré par des moyens de chauffage 160 comportant, en l'espèce, deux bobinages chauffants 161, 162, dont la fonction sera également détaillée ci-après.

La tige 140, le manchon 150 et les bobinages chauffants 161, 162, sont disposés concentriquement les uns aux autres et reçus au sein d'un élément tubulaire 170, entourant lui-même concentriquement ces divers éléments.

La seconde partie filetée de tige 140 présente un diamètre légèrement inférieur à celui de la partie centrale 141 et est liée à celle-ci par l'intermédiaire d'un tronc de cône 143.

Les bobinages 161, 162 entourent étroitement le manchon 150, tandis qu'il existe un certain jeu entre ces bobinages 161, 162 et l'élément tubulaire 170.

Cet élément tubulaire 170 est reçu dans le logement de réception délimité par le premier tronçon de cylindre 122, le second tronçon de cylindre 125 et le raccord annulaire 126. Il présente un diamètre externe correspondant au diamètre interne du second tronçon de cylindre 125 et une butée annulaire 171 le prolongeant radialement, sur la périphérie de l'une de ses extrémités longitudinales. Cette butée annulaire externe 171 est enserrée, en sens axial, entre l'épaulement formé par le raccord annulaire 126 et un plateau 180 s'étendant transversalement à l'axe 110 au sein du premier tronçon de cylindre 122.

Ce plateau transversal 180 est, lui-même, monté dans le premier tronçon de cylindre 122, en sorte de faire coopérer, en sens axial, la butée annulaire externe 171 avec l'épaulement formé par le raccord annulaire 126, au moyen d'un bague 190 filetée extérieurement et engagée sur un taraudage ménagé dans la paroi du premier tronçon de cylindre 122.

Pour permettre le vissage, la bague 190 présente des entailles 191, 191' dans lesquelles on vient introduire une clé correspondante.

Le plateau transversal 180 est, par ailleurs, pourvu d'une ouverture centrale circulaire 181 dans laquelle est engagée l'extrémité de la tige 140 opposée à celle sur laquelle est engagée la seconde pièce d'interface 130. Un écrou 142 est engagé sur la partie filetée de cette extrémité de tige 140 et est serré contre le plateau 180, avec interposition d'une rondelle 182.

Le plateau transversal 180 comporte également une première zone à casser axiale 185, sous la forme d'une diminution de l'épaisseur du plateau 180. Cette diminution d'épaisseur est réalisée au moyen de deux rainures circulaires en forme de V 186, 187 ménagées, en regard l'une de l'autre, dans les deux côtés opposés du plateau 180.

Cette zone à casser 185 continue et de moindre épaisseur définit une zone interne en forme de disque 188 en contact avec la butée annulaire externe 171 et une extrémité longitudinale du manchon 150 et une zone périphérique annulaire 189 en contact avec la bague 190.

A son autre extrémité longitudinale, le manchon 150 vient buter, avec interposition d'une rondelle 151, contre un rebord annulaire interne 172 de l'élément tubulaire 170, s'étendant radialement.

Ce rebord annulaire interne est situé légèrement en retrait par rapport à l'extrémité libre correspondante de l'élément tubulaire 170, en sorte de définir un lamage 173 contre lequel vient buter, axialement et radialement, un plateau transversal 144 de la tige 140, réalisé d'un seul tenant avec cette dernière.

Entre la surface du plateau de tige 144 qui vient buter contre le lamage 173 et la partie centrale 141 de la tige 140, la tige 140 présente une réduction sensible de diamètre constituant une seconde zone à casser 145 transversale.

Un écrou six pans 146 est engagé sur le filetage de la tige 140 recevant la seconde pièce d'interface 130 et enserré entre cette dernière pièce 130 et une collerette 147 de la tige 140.

La tige 140 et le plateau transversal 180 sont réalisés en un matériau cassant.

L'alliage à mémoire de forme constituant le manchon 150 est un alliage classique à mémoire de forme constitué à 50 % de nickel et à 50 % de titane dont la température critique de déformation, ici en allongement, est de 70°C.

Ce manchon 150 constitue l'organe de rupture défini ci-dessus, les moyens de blocage définis ci-dessus comportant principalement la tige 140, l'élément tubulaire 170, le plateau transversal 180, la bague 190 et l'écrou 142.

En ce qui concerne les moyens de chauffage du manchon 150, seuls ont été représentés les bobinages chauffants 161, 162. L'homme du métier saura réaliser le circuit électrique approprié pour amener ces bobinages 161, 162 à chauffer le manchon 150 au-delà de la température critique l'amenant à se déformer et de telle sorte que le bobinage 162 le plus éloigné du manchon 150 puisse prendre la relève du premier bobinage 161 en cas de défaillance de ce dernier.

En ce qui concerne l'assemblage de ce système de blocage 100, on notera simplement que l'écrou six pans 146 est destiné à recevoir une clef pour empêcher la tige 140 de tourner lorsque l'on vient serrer l'écrou 142 contre le plateau transversal 180.

On va maintenant décrire le fonctionnement de ce système de blocage 100.

Sur la moitié gauche I des figures 1 et 2, ce système de blocage 100 est représenté dans la position de blocage dans laquelle le plateau mobile 115 et l'embase de fixation 116 sont bloqués en déplacement dans les deux sens de la direction prédéterminée 110.

Le déverrouillage s'opère de la façon suivante.

Les moyens de chauffage sont mis en action afin de chauffer le manchon 150 au-delà de la température critique l'amenant à se déformer par allongement.

Lors de son allongement, ce manchon 150 va constituer un organe de rupture, car celui-ci va d'une part exercer une poussée axiale sur le plateau transversal 180 et, d'autre part, sur le rebord annulaire interne 173 de l'élément tubulaire 170. Ainsi, la zone à casser 185 du plateau 180 est sollicitée par l'organe de rupture 150 jusqu'à rupture.

En même temps, l'organe de rupture 150 exerce également une poussée sur le rebord annulaire interne 173 et donc sur le plateau 144 de la tige 140, mais également sur la tige 140 elle-même, tandis que le plateau transversal 180 sollicite, simultanément, la tige 140 suivant un sens opposé à celui de la poussée précédente, par l'intermédiaire de la rondelle 182 et de l'écrou 142.

La tige 140 est ainsi sollicitée de part et d'autre de la seconde zone à casser 145 par des forces dirigées en sens opposés, amenant la seconde zone à casser 145 jusqu'à la rupture.

Grâce à ces dispositions, on assure une quasi simultanéité des ruptures des zones à casser 185 et 145, ou du moins de la zone 145 avant la zone 185, compte tenu des sollicitations exercées sur la première. On évite ainsi une rupture de la première zone à casser 185 avant la seconde zone à casser 145, au cours de laquelle la rétractation de l'élément tubulaire 170 entraînerait avec lui le plateau mobile 115. Une rupture de la seconde zone à casser 145 avant la première zone à casser 185 peut avoir lieu, car l'organe de rupture 150 viendra encore buter contre le rebord annulaire interne 172 pour assurer la rupture de la première zone à casser 185.

Suite à ces ruptures, dont le début est schématiquement représenté sur la moitié gauche II de la figure 1, l'élément tubulaire 170 va coulisser, avec guidage par la surface interne du second tronçon de cylindre 125, sous l'effet de la gravité, jusqu'à une position rétractée au sein de la première pièce d'interface 120, tout en entraînant en coulissement la partie correspondante de la tige 140 avec l'écrou 142 et la rondelle 182, le manchon 150, les bobinages 161 et 162, ainsi que la partie 188 de plateau transversal 180.

Dans la position rétractée, montrée sur la moitié gauche II de la figure 2, l'extrémité basse de la tige 140 vient buter contre l'embase de fixation 116, tandis que le coulissement des éléments précités a dégagé un espace important qui, après déblocage, offre à l'extrémité du plateau 115 mobile, une grande liberté de débattement axial, ou angulaire si le plateau 115 est monté mobile en basculement.

On observera qu'un tel système de blocage 100, notamment grâce à la mise en oeuvre de deux zones à casser et de moyens permettant la rétractation d'une partie des moyens de blocage au sein d'une des pièces d'interface, permet, d'une part, de réaliser un blocage en déplacement de deux corps l'un par rapport à l'autre, suivant les deux sens d'une direction prédéterminée, tout en offrant, après déblocage, un grand débattement axial suivant la direction prédéterminée 110 d'un corps par rapport à l'autre ou encore, dans le cas d'un plateau mobile en basculement 115, un grand débattement angulaire.

Un tel système de blocage est également particulièrement fiable, notamment grâce à la redondance des moyens de chauffage et précis de par la mise en oeuvre d'un organe de rupture constitué d'un alliage à mémoire de forme, ayant pour caractéristique propre de se déformer de façon très importante sur une plage de températures très faible, alors qu'en-dessous de la température critique de déformation, celui-ci se dilate très peu.

En outre, ce système de blocage se présente sous la forme d'un ensemble prémonté qui peut être assemblé sur les deux corps au dernier moment.

Il est bien sûr possible de mettre en oeuvre plusieurs de ces systèmes de blocage pour verrouiller deux corps l'un par rapport à l'autre.

En pratique, les caractéristiques structurelles du système de blocage sont les suivants :
- allongement de l'organe de rupture : environ 3 %
- course de rétractation : environ 35 mm
- longueur de l'organe de rupture 150 : environ 40 mm
- diamètre externe de l'organe de rupture 150 : environ 20 mm
- diamètre externe de l'élément tubulaire 170 : environ 34 mm
- diamètre externe du premier tronçon cylindrique 122 : environ 82 mm

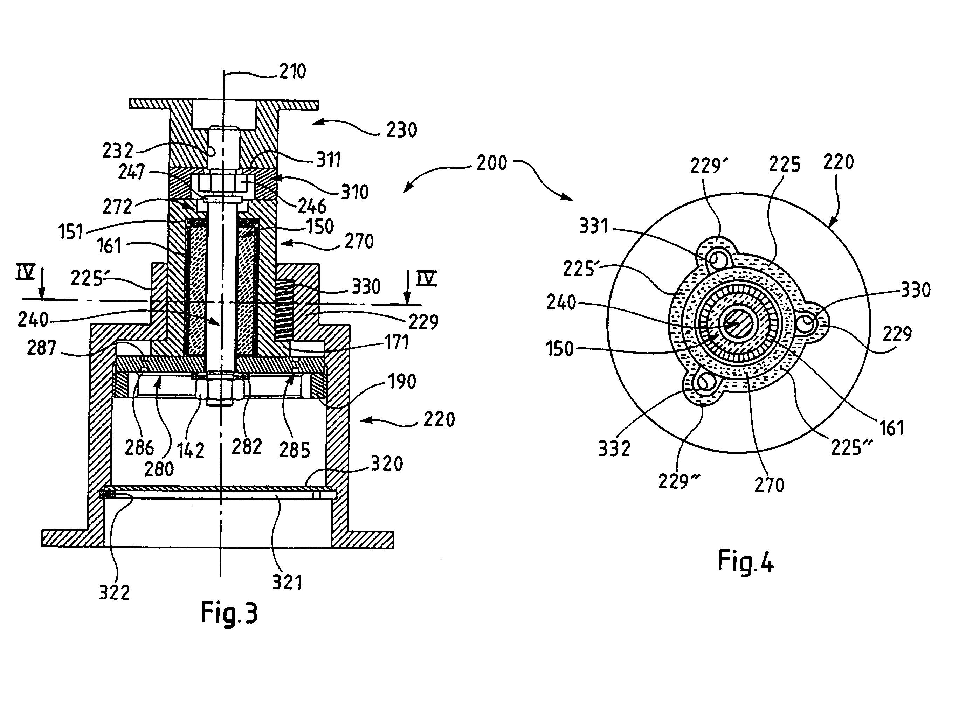

On va maintenant décrire brièvement, à l'appui des figures 3 et 4, un second mode de réalisation du système de blocage conforme à la présente invention.

Il s'agit ici plus particulièrement d'un système de blocage temporaire de déplacement 200 suivant un seul sens d'une direction prédéterminée, à savoir un déplacement vers le bas selon l'axe longitudinal 210 du système de blocage 200. En d'autres termes, ce système de blocage 200 est en fait un système de maintien temporaire en écartement de deux corps l'un par rapport à l'autre.

Pour cette variante 200 du système de blocage montré sur les figures 3 et 4, on a utilisé les mêmes références numériques que pour le système de blocage 100 des figures 1 et 2 pour des éléments identiques, tandis que pour des éléments similaires on a respectivement rajouté le chiffre 100.

Le système de blocage 200 montré sur les figures 3 et 4 se différencie principalement de celui des figures 1 et 2 par le fait que les deux pièces d'interface 220 et 230 similaires à celles des figures 1 et 2 viennent simplement en appui contre un corps correspondant, sans fixation par vissage (ces corps n'ont pas été représentés sur les figures), et qu'il n'y a plus de seconde zone à casser sur la tige 240, ni d'ailleurs de plateau de tige 144, cette tige 240 présentant simplement une saillie monobloc à contour hexagonal 246 et une collerette 247 destinée à venir buter contre un rebord annulaire 272 de l'élément tubulaire 270.

En outre, en lieu et place du second tronçon de cylindre 125, le premier tronçon de cylindre 220 est prolongé par des tronçons de parois cylindriques 225, 225', 225", d'une part, et par des oreilles 229, 229', 229" de logement de ressorts, d'autre part. Ces oreilles constituent des logements pour des ressorts hélicoïdaux 330, 331, 332 venant buter, d'une part, contre une paroi transversale supérieure du logement correspondant et, d'autre part, contre le rebord annulaire externe 171 de l'élément tubulaire 270, afin de solliciter cet élément tubulaire, et donc les moyens de blocage, vers la position rétractée.

Il est ici mis en oeuvre trois ressorts hélicoïdaux 330-332 et trois oreilles de logement 229-229" liées circonférentiellement par les tronçons de parois cylindriques 225-225", les oreilles et tronçons de parois prolongeant axialement et d'un seul tenant, le premier tronçon de cylindre 220.

Cette mise en oeuvre de ressorts s'avère particulièrement intéressante dans le domaine spatial pour suppléer à l'effet de la gravité par libération d'énergie potentielle.

Par ailleurs la seconde pièce d'interface 230 n'est pas vissée sur la tige 240, mais simplement engagée par l'intermédiaire d'un alésage 232 sur une partie lisse que présente cette tige 240 à l'une de ses extrémités longitudinales.

La rondelle 182 a été remplacée par une rondelle 282 à profil en L. Les rainures en forme de V 186, 187 ont été remplacées par des rainures en forme de U 286, 287.

De plus une pièce de calage 310 cylindrique et présentant à l'une de ses extrémités un rebord annulaire interne 311 venant buter, d'une part, contre la seconde pièce d'interface 230 et, d'autre part, contre la saillie 246, est interposée entre l'élément tubulaire 270 et cette seconde pièce d'interface 230, afin d'assurer la continuité entre ces deux derniers éléments et une reprise des efforts transverses lors du passage de la position de blocage à la position rétractée des moyens de blocage.

La position de rétractation correspond ici à une venue en butée de l'extrémité basse de la tige 240 contre un plateau de butée 320 monté transversalement dans la première pièce d'interface 220, à l'aide d'un circlip 321, au sein d'une gorge étagée 322.

Enfin, il n'est prévu qu'un seul bobinage chauffant 161, sans bobinage chauffant de secours.

Le fonctionnement est similaire à celui du mode de réalisation des figures 1 et 2.

La rupture de la seule zone à casser 285 entraîne le passage des moyens de blocage et de la seconde pièce d'interface 230 en position rétractée, permettant à un corps de se rapprocher de l'autre.

Il est entendu que la seconde pièce d'interface 230 pourrait également être solidarisée au second corps correspondant.

L'homme du métier saura également adapter les caractéristiques du mode de réalisation des figures 1 et 2 à celui des figures 3 et 4 et vice-versa.

Dans d'autres variantes non illustrées, la butée transversale haute pour l'organe de rupture peut être constituée, au lieu du rebord annulaire interne d'un élément tubulaire, par une surface de butée de la seconde pièce d'interface solidaire de la tige, ou par le plateau 144 lui-même.

L'homme du métier saura également, sur la base des enseignements qui précèdent, réaliser un système de blocage dont l'organe de rupture agira par raccourcissement sous l'effet d'un chauffage ou encore d'un système de blocage comportant simplement deux pièces d'interface adaptées chacune à coopérer avec un corps et liées par une tige présentant une zone à casser et entourée d'un manchon constitué d'un alliage à mémoire de forme qui vient buter à chacune de ses extrémités longitudinales contre une pièce d'interface correspondante.

En variante, on pourra aussi utiliser un autre alliage à mémoire de forme en tant qu'organe de rupture, dont la température critique sera choisie selon l'application donnée.

On pourra également prévoir qu'une des pièces d'interface fasse partie intégrante du corps correspondant ou que le plateau transversal 180, 280 fasse partie intégrante de la tige 140, 240.

Une application du système de blocage de la présente invention pourra également être la suspension temporaire d'un corps à un autre.

## Revendications

1. Système de blocage temporaire (100 ; 200) de déplacement de deux corps l'un par rapport à l'autre, suivant au moins un sens d'une direction (110 ; 210) prédéterminée, caractérisé en ce qu'il comporte :
- une première pièce d'interface (120 ; 220) adaptée à coopérer avec un premier (116) des deux corps ;
- une seconde pièce d'interface (130 ; 230) adaptée à coopérer avec le second (115) des deux corps ;
- des moyens de blocage (140 ; 240) pourvus d'une zone à casser (145, 185; 285) et adaptés à coopérer avec les pièces d'interface pour assurer le blocage temporaire de déplacement des deux corps avec maintien de ces derniers à distance l'un de l'autre avant rupture de la zone à casser et à s'effacer dès rupture de la zone à casser de manière à permettre un déplacement relatif des deux corps (115, 116), au moins sur une partie de la distance d'éloignement des deux corps avant rupture de la zone à casser ;
- un organe de rupture (150) constitué d'un alliage à mémoire de forme adapté à se déformer sous l'effet d'un chauffage pour venir rompre la zone à casser (145, 185 ; 285) ; et
- des moyens de chauffage (160) adaptés à chauffer ledit organe de rupture (150) au-delà d'une température critique pour amener l'alliage à mémoire de forme à se déformer.

2. Système de blocage selon la revendication 1, caractérisé en ce que ledit organe de rupture (150) est adapté à se déformer par allongement suivant ladite direction sous l'effet d'un chauffage.

3. Système de blocage selon la revendication 2, caractérisé en ce que ledit organe de rupture (150) est interposé entre deux butées transversales (172, 180 ; 272, 280) à ladite direction, de manière que l'organe de rupture, lors de son allongement, sollicite lesdites butées dans le sens d'une rupture de la zone à casser (145, 185 ; 285).

4. Système de blocage selon la revendication 2 ou 3, caractérisé en ce que l'une (120 ; 220) des pièces d'interface comporte un logement de réception d'une partie au moins des moyens de blocage, ces moyens de blocage étant montés par l'une de leurs extrémités sur la pièce d'interface à logement de réception, mobiles entre une position de blocage de déplacement avant rupture de la zone à casser (145, 185 ; 285), dans laquelle ces moyens de blocage font partiellement saillie du logement de réception et une position dans laquelle pratiquement l'ensemble des moyens de blocage est rétracté au sein du logement de réception, après rupture de la zone à casser (145, 185; 285).

5. Système de blocage selon la revendication 4, caractérisé en ce que les moyens de blocage sont amenés en position rétractée par libération d'énergie potentielle.

6. Système de blocage selon la revendication 4, caractérisé en ce que les moyens de blocage sont amenés en position rétractée par effet de gravité.

7. Système de blocage selon la revendication 5, caractérisé en ce que les moyens de blocage sont amenés en position rétractée au moyen d'un élément de rappel élastique (330-332).

8. Système de maintien selon l'une quelconque des revendications 4 à 7, lorsqu'elles dépendent de la revendication 3, caractérisé en ce que l'une des butées transversales à ladite direction comporte un plateau (180 ; 280) s'étendant dans le logement de réception, transversalement à ladite direction, en ce que ladite zone à casser est constituée par une zone continue de moindre épaisseur du plateau définissant une zone interne (188) contre laquelle vient buter une extrémité longitudinale de l'organe de rupture (150) et une zone périphérique (189), ledit plateau étant supporté dans ledit logement de réception, dans ladite position de blocage, par la zone périphérique (189).

9. Système de maintien selon la revendication 8, caractérisé en ce que lesdits moyens de blocage comportent en outre une tige (140 ; 240) s'étendant selon ladite direction, ledit plateau (180 ; 280) présentant une ouverture circulaire de passage de ladite tige, ladite tige comportant une extrémité filetée engagée dans ladite ouverture, et un écrou (142) monté sur ledit filetage, en butée contre ledit plateau (180 ; 280).

10. Système de blocage selon la revendication 9, caractérisé en ce que l'autre pièce d'interface est solidaire de ladite tige et présente une surface de butée constituant l'autre butée transversale contre laquelle vient buter la seconde extrémité longitudinale de l'organe de rupture.

11. Système de blocage selon la revendication 9, caractérisé en ce que la tige comporte un plateau transversal au voisinage de son extrémité opposée à ladite extrémité filetée, ce plateau transversal de tige présentant une surface de butée constituant l'autre butée transversale contre laquelle vient buter l'autre extrémité longitudinale de l'organe de rupture, et une partie lisse à cette extrémité opposée sur laquelle est engagée une ouverture circulaire de l'autre pièce d'interface.

12. Système de blocage selon la revendication 9, caractérisé en ce que le logement de réception est délimité par une paroi cylindrique comportant un épaulement transversal (126) à l'axe longitudinal de ladite paroi, ladite direction étant coaxiale audit axe, le système de blocage comportant en outre un élément tubulaire (170 ; 270) reçu dans le logement de réception et présentant une butée annulaire externe (171), à l'une de ses extrémités longitudinales, adaptée à coopérer en sens axial avec ledit épaulement (126) et un rebord annulaire interne (172) au voisinage de son autre extrémité longitudinale, ledit organe de rupture étant constitué par un manchon (150) entourant ladite tige, ledit organe de rupture et ladite tige (140) étant reçus dans ledit élément tubulaire (170) de sorte que ledit organe de rupture, lors de sa déformation, vienne buter, d'une part, contre ledit plateau transversal (180 ; 280)et, d'autre part, contre ledit rebord annulaire interne (172 ; 272), et ladite butée annulaire externe (171) étant, en position de blocage, enserrée entre le plateau transversal (180) et l'épaulement (126) de l'élément tubulaire.

13. Système de blocage selon la revendication 12, caractérisé en ce que la tige présente en outre un second plateau transversal (144) au voisinage de son extrémité opposée à ladite extrémité filetée, le second plateau transversal (144) étant adapté à venir en butée contre le rebord annulaire interne de l'élément tubulaire par l'un de ses côtés, la tige présentant en outre, au voisinage de ce côté, une réduction sensible de diamètre constituant une seconde zone à casser transversale (145) et, au voisinage de l'autre côté, une seconde extrémité longitudinale filetée sur laquelle est engagé un taraudage de l'autre pièce d'interface (130).

14. Systèmè de blocage selon les revendications 12 ou 13, caractérisé en ce que les moyens de chauffage comportent une bobine (161) chauffante entourant ledit manchon (150).

15. Système de blocage selon la revendication 14, caractérisé en ce que les moyens de chauffage comportent une seconde bobine (162) chauffante, les moyens de chauffage (160) étant adaptés à chauffer l'organe de rupture (150) au moyen de la seconde bobine (162) en cas de défaillance de ladite bobine chauffante.

16. Système de blocage selon l'une quelconque des revendications 12 à 15, caractérisé en ce que ledit plateau transversal (180 ; 280) est supporté dans ledit logement de réception au moyen d'une bague (190) présentant un filetage externe engagé sur un taraudage de la paroi cylindrique du logement.

17. Système de blocage selon l'une quelconque des revendications 12 à 16, lorsqu'elles dépendent de la revendication 7, caractérisé en ce que l'élément élastique de rappel comporte au moins un ressort hélicoïdal (330-332) disposé latéralement entre l'élément tubulaire et la paroi cylindrique, ce ressort venant buter longitudinalement, d'une part, contre la butée annulaire externe (171) de l'élément tubulaire (170 ; 270), du côté opposé de cette butée à celui portant contre le plateau transversal (180 ; 280), et, d'autre part, contre une paroi d'une oreille de logement du ressort, transversale à l'axe longitudinal.

18. Dispositif selon l'une quelconque des revendications 1 à 17, caractérisé en ce que chacune des pièces d'interface est fixée au corps correspondant par vissage.

## Patentansprüche

1. System zum zeitweiligen Sperren (100; 200) einer relativen Bewegung zwischen zwei Körpern in zumindest einem Sinn einer vorgegebenen Richtung (110; 210), dadurch gekennzeichnet, daß es folgendes aufweist:
- ein erstes Zwischenglied (120; 220), das dafür ausgelegt ist, mit einem ersten (116) der beiden Körper zusammenzuwirken;
- ein zweites Zwischenglied (130; 230), das dafür ausgelegt ist, mit dem zweiten (115) der beiden Körper zusammenzuwirken;
- Sperrmittel (140; 240), die mit einer Bruchzone (145, 185; 285) ausgestattet und dafür ausgelegt sind, mit den Zwischengliedern zusammenzuwirken, um das zeitweilige Sperren der relativen Bewegung zwischen den beiden Körpern zu gewährleisten, wobei diese beiden vor dem Bruch der Bruchzone in einem Abstand voneinander gehalten werden, und um sich beim Bruch der Bruchzone so zurückzuziehen, daß eine relative Bewegung zwischen den beiden Körpern (115, 116) zumindest auf einem Teil des Abstands der Entfernung der beiden Körper vor dem Bruch der Bruchzone zuzulassen;
- ein Bruchorgan (150), das von einer Legierung mit Formerinnerungsvermögen gebildet wird und das dafür ausgelegt ist, sich unter der Wirkung einer Erhitzung zu deformieren, um die Bruchzone (145, 185; 285) zu zerbrechen; und
- Heizmittel (160), die dafür ausgelegt sind, das Bruchorgan (150) bis auf eine kritische Temperatur aufzuheizen, um die Legierung mit Formerinnerungsvermögen dazu zu bringen, sich zu deformieren.

2. Sperrsystem nach Anspruch 1, dadurch gekennzeichnet, daß das Bruchorgan (150) dafür ausgelegt ist, sich unter der Wirkung eines Aufheizens durch Verlängerung gemäß der Richtung zu deformieren.

3. Sperrsystem nach Anspruch 2, dadurch gekennzeichnet, daß das Bruchorgan (150) zwischen zwei Anschläge (172, 180; 272, 280) gesetzt ist, welche transversal zu der Richtung sind, so daß das Bruchorgan bei seiner Verlängerung die Anschläge im Sinn eines Zerbrechens der Bruchzone (145, 185; 285) belastet.

4. Sperrsystem nach Anspruch 2 oder 3, dadurch gekennzeichnet, daß eines (120; 220) der Zwischenglieder einen Aufnahmesitz für mindestens einen Teil der Sperrmittel aufweist, wobei diese Sperrmittel mit einem ihrer Enden auf dem Zwischenglied mit Aufnahmesitz angebracht sind, zwischen einer Position zur Sperrung der Bewegung vor dem Zerbrechen der Bruchzone (145, 185; 285), in der diese Sperrmittel teilweise eine Auskragung des Aufnahmesitzes bilden, und einer Position, in der praktisch die Gesamtheit der Sperrmittel nach dem Zerbrechen der Bruchzone (145, 185; 285) ins Innere des Aufnahmesitzes zurückgezogen ist, beweglich sind.

5. Sperrsystem nach Anspruch 4, dadurch gekennzeichnet, daß die Sperrmittel durch Freisetzung potentieller Energie in die zurückgezogene Position mitgeführt werden.

6. Sperrsystem nach Anspruch 4, dadurch gekennzeichnet, daß die Sperrmittel durch Schwerkraftwirkung in die zurückgezogene Position mitgeführt werden.

7. Sperrsystem nach Anspruch 5, dadurch gekennzeichnet, daß die Sperrmittel mittels eines elastischen Rückstellelements (330-332) in die zurückgezogene Position mitgeführt werden.

8. Haltesystem nach einem der Ansprüche 4 bis 7, soweit sie von Anspruch 3 abhängen, dadurch gekennzeichnet, daß einer der zu der Richtung transversalen Anschläge eine Platte (180; 280) aufweist, die sich im Aufnahmesitz transversal zur Richtung erstreckt, daß die Bruchzone von einer kontinuierlichen Zone geringerer Dicke der Platte gebildet wird, die eine interne Zone (188) definiert, gegen die ein longitudinales Ende des Bruchorgans (150) zum Anschlag gelangt, und eine Umfangszone (189), wobei die Platte in der Sperrposition im Aufnahmesitz von der Umfangszone (189) getragen wird.

9. Haltesystem nach Anspruch 8, dadurch gekennzeichnet, daß die Sperrmittel außerdem einen Schaft (140; 240) aufweisen, der sich gemäß der Richtung erstreckt, wobei die Platte (180; 280) eine kreisförmige Durchgangsöffnung für den Schaft aufweist, wobei der Schaft ein mit einem Gewinde versehenes Ende, das mit der Öffnung in Eingriff steht, und eine Mutter (142) aufweist, die auf dem Gewinde aufgebracht ist und im Anschlag gegen die Platte (180; 280) steht.

10. Sperrsystem nach Anspruch 9, dadurch gekennzeichnet, daß das andere Zwischenglied drehfest mit dem Schaft verbunden ist und eine Anschlagoberfläche aufweist, die den anderen transversalen Anschlag bildet, gegen den das zweite longitudinale Ende des Bruchorgans zum Anschlag gelangt.

11. Sperrsystem nach Anspruch 9, dadurch gekennzeichnet, daß der Schaft eine transversale Platte in der Nähe seines Endes, das dem mit dem Gewinde versehenen Ende entgegengesetzt ist, wobei diese transversale Platte des Schafts eine Anschlagoberfläche aufweist, die den anderen transversalen Anschlag bildet, gegen den das andere longitudinale Ende des Bruchorgans zum Anschlag gelangt, und einen glatten Teil an diesem entgegengesetzten Ende aufweist, auf dem eine kreisförmige Öffnung des anderen Zwischenglieds in Eingriff steht.

12. Sperrsystem nach Anspruch 9, dadurch gekennzeichnet, daß der Aufnahmesitz von einer zylindrischen Wand begrenzt ist, die eine Schulter (126) transversal zur Longitudinalachse der Wand aufweist, wobei die Richtung koaxial zu der Achse ist, wobei das Sperrsystem darüber hinaus ein röhrenförmiges Element (170; 270) aufweist, das im Aufnahmesitz aufgenommen ist und einen ringförmigen äußeren Anschlag (171) an einem seiner longitudinalen Enden aufweist, der dafür ausgelegt ist, im axialen Sinn mit der Schulter (126) zusammenzuwirken, und einen inneren ringförmigen Rand (172) in der Nähe seines anderen longitudinalen Endes, wobei das Bruchorgan von einer Muffe (150) gebildet wird, die den Schaft umgibt, wobei das Bruchorgan und der Schaft (140) im röhrenförmigen Element (170) so aufgenommen sind, daß das Bruchorgan bei seiner Deformation einesteils gegen die transversale Platte (180; 280) und andernteils gegen den ringförmigen inneren Rand (172; 272) zum Anschlag gelangt, und wobei der äußere ringförmige Anschlag (171) in der Sperrposition zwischen der transversalen Platte (180) und der Schulter (126) des röhrenförmigen Elements eingeschlossen ist.

13. Sperrsystem nach Anspruch 12, dadurch gekennzeichnet, daß der Schaft außerdem eine zweite transversale Platte (144) in der Nähe seines Endes aufweist, das dem mit dem Gewinde versehenen Ende gegenüberliegt, wobei die zweite transversale Platte (144) dafür ausgelegt ist, gegen den ringförmigen inneren Rand des röhrenförmigen Elements mit einer seiner Seiten zum Anschlag zu gelangen, wobei der Schaft außerdem in der Nähe dieser Seite eine merkliche Verringerung des Durchmessers aufweist, die eine zweite transversale Bruchzone (145) darstellt, und, in der Nähe der anderen Seite, ein zweites longitudinales, mit einem Gewinde versehenes Ende aufweist, auf dem ein Innengewinde des anderen Zwischenglieds (130) aufgeschraubt ist.

14. Sperrsystem nach Anspruch 12 oder 13, dadurch gekennzeichnet, daß die Heizmittel eine Heizspule (161) aufweisen, die die Muffe (150) umgibt.

15. Sperrsystem nach Anspruch 14, dadurch gekennzeichnet, daß die Heizmittel eine zweite Heizspule (162) aufweisen, wobei die Heizmittel (160) dafür ausgelegt sind, das Bruchorgan (150) mittels der zweiten Spule (162) zu heizen, wenn die Heizspule ausfällt.

16. Sperrsystem nach einem der Ansprüche 12 bis 15, dadurch gekennzeichnet, daß die transversale Platte (180; 280) im Aufnahmesitz mittels eines Rings (190) getragen wird, der ein Außengewinde aufweist, welches auf ein Innengewinde der zylindrischen Wand des Sitzes geschraubt ist.

17. Sperrsystem nach einem der Ansprüche 12 bis 16, soweit sie von Anspruch 7 abhängen, dadurch gekennzeichnet, daß das elastische Rückstellelement mindestens eine zylindrische Schraubenfeder (330-332) aufweist, die seitlich zwischen dem röhrenförmigen Element und der zylindrischen Wand angeordnet ist, wobei diese Feder longitudinal einesteils gegen den äußeren ringförmigen Anschlag (171) des röhrenförmigen Elements (170; 270) auf der Seite dieses Anschlags, die derjenigen gegenüberliegt, welche gegen die transversale Platte (180; 280) anliegt, und andererseits gegen eine Wand eines Aufnahmeansatzes der Feder, transversal zur longitudinalen Achse, zum Anschlag kommt.

18. Vorrichtung nach einem der Ansprüche 1 bis 17, dadurch gekennzeichnet, daß jedes der Zwischenglieder am entsprechenden Körper durch Verschraubung befestigt ist.

## Claims

1. System for the temporary blocking (100; 200) of the movement of two bodies with respect to each other, in at least one predetermined direction (110; 210), characterised in that it has:
- a first interface piece (120; 220) adapted to cooperate with a first one (116) of the two bodies;
- a second interface piece (130; 230) adapted to cooperate with the second (115) of the two bodies;
- blocking means (140; 240) provided with an area to be broken (145, 185; 285) and adapted to cooperate with the interface pieces in order to provide the temporary blocking of the movement of the two bodies with the holding of the latter at a distance from each other before rupture of the area to be broken and to retract as soon as the area to be broken ruptures so as to permit a relative movement of the two bodies (115, 116), at least over part of the distance of remoteness of the two bodies before rupture of the area to be broken;
- a rupture member (150) formed from a shape memory alloy adapted to deform under the effect of heating in order to rupture the area to be broken (145, 185; 285); and
- heating means (160) adapted to heat the said rupture member (150) beyond a critical temperature in order to cause the shape memory alloy to deform.

2. Blocking system according to Claim 1, characterised in that the said rupture member (150) is adapted to deform by elongation in the said direction under the effect of heating.

3. Blocking system according to Claim 2, characterised in that the said rupture member (150) is interposed between two stops (172, 180; 272, 280) transverse to the said direction, so that the rupture member, during its elongation, forces the said stops in the direction of a rupture of the area to be broken (145, 185; 285).

4. Blocking system according to Claim 2 or 3, characterised in that one (120; 220) of the interface pieces has a housing for receiving at least part of the blocking means, these blocking means being mounted by one of their ends on the interface piece with a reception housing, movable between a position of movement blocking before rupture of the area to be broken (145, 185; 285), in which these blocking means partially project from the reception housing, and a position in which practically the whole of the blocking means is retracted within the reception housing, after rupture of the area to be broken (145, 185, 285).

5. Blocking system according to Claim 4, characterised in that the blocking means are brought into the retracted position by the release of potential energy.

6. Blocking system according to Claim 4, characterised in that the blocking means are brought into the retracted position by gravity effect.

7. Blocking system according to Claim 5, characterised in that the blocking means are brought into the retracted position by means of an elastic return element (330-332).

8. Holding system according to any one of Claims 4 to 7, when they depend on Claim 3, characterised in that one of the stops transverse to the said direction has a plate (180; 280) extending in the reception housing, transversely to the said direction, in that the said area to be broken consists of a continuous area with a lesser thickness of the plate defining an internal area (188) against which a longitudinal end of the rupture member (150) comes to abut, and a peripheral area (189), the said plate being supported in the said reception housing, in the said blocking position, by the peripheral area (189).

9. Holding system according to Claim 8, characterised in that the said blocking means also include a rod (140; 240) extending in the said direction, the said plate (180; 280) having a circular opening for passage of the said rod, the said rod having a threaded end engaged in the said opening, and a nut (142) mounted on the said thread, in abutment against the said plate (180; 280).

10. Blocking system according to Claim 9, characterised in that the other interface piece is secured to the said rod and has an abutment surface constituting the other transverse stop against which the second longitudinal end of the rupture member comes to abut.

11. Blocking system according to Claim 9, characterised in that the rod has a transverse plate close to its end opposite to the said threaded end, this transverse rod plate having an abutment surface constituting the other transverse stop against which the other longitudinal end of the rupture member comes to abut, and a smooth part at this opposite end on which a circular opening in the other interface piece is engaged.

12. Blocking system according to Claim 9, characterised in that the reception housing is delimited by a cylindrical wall having a shoulder (126) transverse to the longitudinal axis of the said wall, the said direction being coaxial with the said axis, the blocking system also having a tubular element (170; 270) received in the reception housing and having an external annular stop (171), at one of its longitudinal ends, adapted to cooperate in the axial direction with the said shoulder (126) and an internal annular flange (172) close to its other longitudinal end, the said rupture member consisting of a sleeve (150) surrounding the said rod, the said rupture member and the said rod (140) being received in the said tubular element (170) so that the said rupture member, when it deforms, comes to abut on the one hand against the said transverse plate (180; 280) and on the other hand against the said internal annular flange (172; 272), and the said external annular stop (171) being, in the blocking position, gripped between the transverse plate (180) and the shoulder (126) of the tubular element.

13. Blocking system according to Claim 12, characterised in that the rod also has a second transverse plate (144) close to its end opposite to the said threaded end, the second transverse plate (144) being adapted to come into abutment against the internal annular flange of the tubular element through one of its sides, the rod also having, close to this side, a substantial reduction in diameter constituting a second transverse area to be broken (145) and, close to the other side, a second threaded longitudinal end on which a female thread on the other interface piece (13) is engaged.

14. Blocking system according to Claims 12 or 13, characterised in that the heating means have a heating coil (161) surrounding the said sleeve (150).

15. Blocking system according to Claim 14, characterised in that the heating means have a second heating coil (162), the heating means (160) being adapted to heat the rupture member (150) by means of the second coil (162) in the event of failure of the said heating coil.

16. Blocking system according to any one of Claims 12 to 15, characterised in that the said transverse plate (180; 280) is supported in the said reception housing by means of a ring (190) having an external thread engaged on a female thread on the cylindrical wall of the housing.

17. Blocking system according to any one of Claims 12 to 16, when they depend on Claim 7, characterised in that the elastic return element has at least one helical spring (330-332) disposed laterally between the tubular element and the cylindrical wall, this spring abutting longitudinally on the one hand against the external annular stop (171) of the tubular element (170; 270), on the opposite side of this stop to the one bearing against the transverse plate (180; 280), and on the other hand against a wall of a lug housing the spring, transverse to the longitudinal axis.

18. Device according to any one of Claims 1 to 17, characterised in that each of the interface pieces is fixed to the corresponding body by screwing.
